# EUROPEAN PATENT APPLICATION

(11) **EP 2 053 325 A1**
(43) Date of publication of application: **29.04.2009**
(21) Application number: 07020683.4
(22) Date of filing: 23.10.2007
(51) Int. Cl.: F25D 3/06, B65D 81/18, G06Q 10/00

(54) **Collapsible container package; method for packing temperature sensitive goods and container pooling system**

(71) Applicant: Deutsche Post AG, 53113 Bonn (DE)
(72) Inventor: Rosendahl, Richard, 1000 Bruxelles (BE); Picaud, Cedric, 1000 Bruxelles (BE)
(74) Representative: Jostarndt, Hans-Dieter

(57) **Abstract**

The invention relates to a collapsible container package (10,10',10") comprising a collapsible outer container (20) with a base plate (21), a cover (23) and four hinged sidewalls (22) which form the interior space of the unfolded container (20) and at least one inner container (30), which is arranged in the interior space of the unfolded outer container (20) with a surrounding interspace (24) between the inner container (30) and the cover (23) and the sidewalls (22) of the outer container (20). Several cooling elements (41;42) are arranged in the surrounding interspace (24) between the inner container (30) and the cover (23) and the sidewalls (22) of the outer container (20). The invention also relates to a method for packing temperature sensitive goods (50) into such collapsible container packages (10,10',10").

The invention further relates to a container pooling system (60) using said collapsible container packages (10,10',10") and a method for operating such container pooling system (60).

## Description

The invention relates to a collapsible container package comprising a collapsible outer container with a base plate, a cover and four hinged sidewalls which form the interior space of the unfolded container and at least one inner container, which is arranged in the interior space of the unfolded outer container with a surrounding interspace between the inner container and the cover and the sidewalls of the outer container. The invention also relates to a method for packing temperature sensitive goods into such collapsible container.

The invention further relates to a container pooling system using said collapsible container packages and a method for operating such container pooling system.

A number of plastic containers having hinged or otherwise collapsible sidewalls have been proposed, since collapsing sidewalls provide the ability to reduce the volume required for such containers during storage or reshipment of reusable containers. U.S. patent application publication No. 2001/0038011 A1 discloses a collapsible container with reduced deflection, for example. Furthermore, international patent application WO 88/10223 A1 describes a collapsible enclosure for receiving a liquid-containing bag.

In particular, instead of using one-way packaging products the advantages of reusable containers can be used for container pooling, whereby container pooling is the shared use of containers by multiple users. A user of such pooling system can order one or more containers from a service center of a service provider who will provide the required containers. The user then ships his products through the supply chain using the ordered containers. At the end of the supply chain, the receiving user or the user who originally ordered the containers returns the containers to the nearest service center. Alternatively, containers can be collected by the service provider. The service provider inspects and maybe cleans the containers and the containers can then be issued to the next customer for its customized use and movement through the supply chain.

Furthermore, collapsible containers can be provided with cooling elements in order to cool the contents of the container. Published German patent application DE 196 11 027 A1 discloses a collapsible container with recesses for holding exchangeable cooling elements, for example. Cooling elements can be combined with insulating walls or exchangeable insulating elements in order to establish cooling conditions with predefined temperatures over a longer period. For example, from German Patent DE 102 06 109 C1 a packaging for transport of temperature sensitive products is known, which comprises a collapsible outer container and insulating elements which can be inserted into the container. Another container is placed in the internal space which is made up by the insulating elements. Cooling elements and the products to be shipped are positioned in this second container.

Based on the prior art it is an objective of the invention to provide an improved container package which offers multiple users the opportunity to ship temperature sensitive goods in reusable containers.

The objective of the invention is also to provide a method for packaging temperature sensitive goods into such containers and to provide an associated container pooling system.

According to the invention, this objective is achieved by a collapsible container packaging having the features of the independent Claim 1. Advantageous refinements of the container package are set forth in the subordinate Claims 2 through7. The objective is also achieved by a method for packing temperature sensitive goods according to Claim 8. Advantageous embodiments of the method are likewise set forth in the subordinate Claims 8 through 12. The objective is also achieved by a container pooling system having features of Claim 13 and a method for operating such container pooling system according to Claim 18. Advantageous embodiments of the container pooling system are set forth in the subordinate Claims 14 through 17.

A first aspect of the invention is a collapsible container package comprising a collapsible outer container with a base plate, a cover and four hinged sidewalls which form the interior space of the unfolded container. Furthermore the container package comprises at least one inner container, which is arranged in the interior space of the unfolded outer container with a surrounding interspace between the inner container and the cover and the sidewalls of the outer container. Several cooling elements are arranged in the surrounding interspace between the inner container and the cover and the sidewalls of the outer container.

In one embodiment of the invention, further cooling elements are arranged between the inner container and the base plate of the outer container. Additional insulation panels can be placed between the cooling elements and the cover, the sidewalls and/or the base plate of the outer container.

Preferably, at least two layers of different types of cooling elements are arranged in the surrounding interspace between the inner container and the cover and the sidewalls of the outer container, whereby the inner layer close to the inner container comprises a first type of cooling elements which are cooled to temperatures between 0°C and 10°C and the outer layer close to the sidewalls of the outer container comprises a second type of cooling elements which are cooled to temperatures between -15°C and -25°C. Preferably, the first type of cooling elements are cooled to about +5°C and the second type of cooling elements are cooled to about -20°C.

The material of the base plate, the cover and the hinged sidewalls of the outer collapsible container can be a plastic material, whereas the inner container can be a cardboard box, for example. In one embodiment of the invention, additional insulation panels are placed between the cooling elements and the cover, the sidewalls and/or the base plate of the outer container.

A second aspect of the invention relates to a method for packing temperature sensitive goods into a collapsible container packaging as described above. Thereby temperature sensitive goods are placed in at least one inner container, which is placed in the interior space of the unfolded outer container, and several cooling elements are arranged at least in the surrounding interspace between the inner container and the sidewalls of the outer container and on the top of the inner container, whereupon the outer container is closed by using the cover. Further cooling elements can be placed on the base plate of the outer container before the inner container is placed in the interior space of the unfolded outer container.

Preferably, at least two layers of different types of cooling elements are arranged in the surrounding interspace between the inner container and the sidewalls of the outer container and on top of the inner container, whereby the inner layer close to the inner container comprises a first type of cooling elements which are cooled to temperatures between 0°C and 10°C and the outer layer close to the sidewalls and the cover of the outer container comprises a second type of cooling elements which are cooled to temperatures between -15°C and -25°C prior to placing them in the interspace between the inner container and the outer container. In a preferred embodiment of the invention, the first type of cooling elements are cooled to about +5°C and the second type of cooling elements are cooled to about -20°C.

The invention also relates to a container pooling system comprising at least one service center connected to at least one container storage, in which several containers are stored, whereby the service center comprises means for receiving and processing container orders from one or more customers of the container pooling system and the service center further comprises means for forwarding the container orders to the container storage. The containers stored in the container storage are reusable collapsible containers and each container is linked to a cooling package that comprises several cooling elements.

The cooling packages can be arranged within each collapsed container, for example, and the containers and the linked cooling packages can constitute a collapsible container package as described above. Alternatively, cooling packages can be transported within unfolded containers or can be attached to the outside of a collapsed container. They can be provided separately from containers, too. Preferably, each cooling package comprises two types of cooling elements, whereby the first type of cooling elements are designed to be cooled to temperatures between 0°C and 10°C and the second type of cooling elements are designed to be cooled to temperatures between -15°C and -25°C. In a preferred embodiment of the invention, the first type of cooling elements are designed to be cooled to +5°C and the second type of cooling element are designed to be cooled to -20°C. A cooling package can comprise additional insulation panels for placement in the outer container, too.

Reusable collapsible containers are stored in a container storage and a service center receives a container order from a customer of the container pooling system, whereupon the container order is processed by the service center and forwarded to the container storage. A collapsible container is linked to a cooling package that comprises at least several cooling elements, whereupon said container and said cooling package are transported to the customer.

The invention provides an effective cool chain solution for customers who do not wish to maintain their own container pool. The distributor of the collapsible containers and cooling packages manages the return flow, the storage in one or more countries, cleaning, order placement, etc. When containers are equipped with radio frequency transponders (RFID) they can be tracked along their shipping route. Furthermore, signals from sensors like temperature sensors can be read via RFID transponders, too.

Because the containers which are used are collapsible, minimum loading and storage space is required when the containers are not used by customers. The containers are returned to the pooling system and the reusability of the containers lowers costs and is a very environment-friendly logistic solution.

Additional advantages, special features and practical refinements of the invention can be gleaned from the subordinate claims and from the presentation below of preferred embodiments making reference to the figures.

The figures show the following:
- Figure 1: a schematic view of a preferred embodiment of a collapsible container package with cooling elements;
- Figure 2: the placement of insulation panels in a collapsible container as shown in Figure 1;
- Figure 3: three collapsed container packages with integrated cooling packages; and
- Figure 4: a preferred embodiment of a container pooling system.

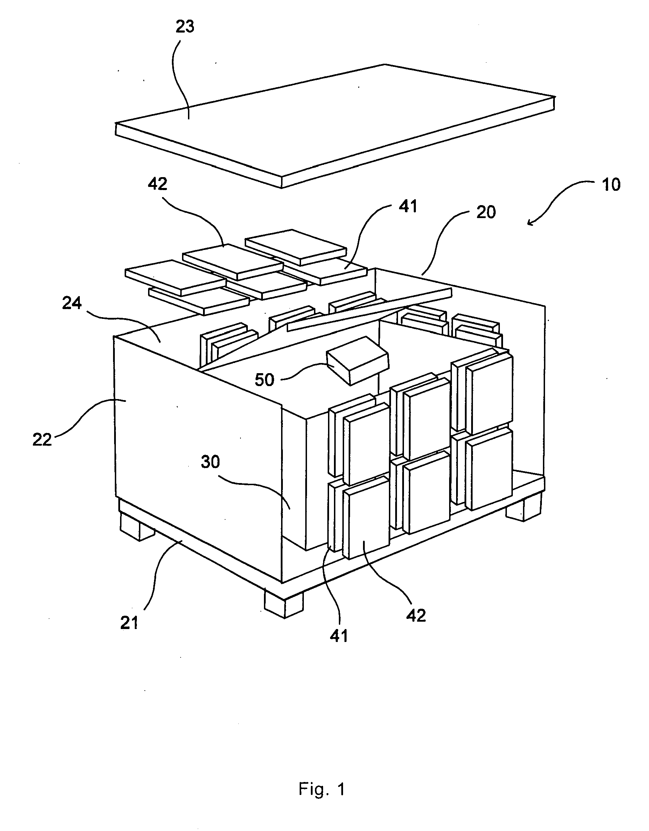

Figure 1 shows a schematic view of a preferred embodiment of a collapsible container package10 with several cooling elements 41 and 42. The container package comprises a collapsible outer container 20 and at least one inner container 30. Temperature sensitive goods 50 like medicals are placed in an inner container and said inner container 30 is arranged in the interior space of the outer container 20. Preferably, the material of the outer container 20 is a plastic material like polypropylene, for example, whereas the inner container 30 is a cardboard box.
More than one inner container with temperature sensitive goods can be placed in the outer container.

The outer container 20 comprises a base plate 21 and four hinged sidewalls 22, which are attached to the base plate 21. Preferably, the base plate is shaped like a standard pallet. The pallet can have the size of a British pallet (120cm x 100cm) or a Euro pallet (120cm x 80cm), for example.

The sidewalls 22 are coupled to the base by a plurality of hinges which are not shown in the figures. However, well known hinge configurations for attaching sidewalls to a base plate of a collapsible container can be used. The sidewalls can be connected to each other by detachable connections. One or more of the sidewalls can comprise a side door and/or handles. The container can be closed by using a cover 23. The cover can be attached to a sidewall by means of a hinge, too. In another embodiment, the cover is a separate component, which is put over the opening of the container.

The unfolded outer container 20 can have a volume of about 0.70-1 m³ and unfolded containers as well as collapsed containers can be stacked. Optional shelves within the container or lids for rain and dust protection can also be provided.

When the outer container is supposed to be collapsed, preferably two opposing sidewalls are folded into the interior space of the container first. Then the remaining two opposite sidewalls can be folded, too. Preferably, the dimensions and the mounting of the sidewalls allows for folding the sidewalls onto each other and thereby forming a cuboidal body of a collapsed container.

When the outer container is unfolded, its base plate and sidewalls form an interior space. One or more inner containers 30 are placed in said interior space with a surrounding interspace 24 between the inner container/s 30 and the sidewalls 22 of the outer container and the cover 23. In order to cool the temperature sensitive goods 50 in the inner container, several cooling elements 41 and 42 are arranged in the surrounding interspace 24. Well known cooling elements like gel packs can be used, for example. The schematic view of figure 1 shows an example for an arrangement of cooling elements. In alternative embodiments, cooling elements with smaller ore greater size can be chosen and arranged in different ways. In any case, the cooling elements are cooled to low temperatures which are required for a safe transport and are then arranged around and on top of the inner container 30. In another embodiment of the invention, cooling elements are placed on the base plate 21, too, before the inner container 30 is placed in the outer container 20. After filling the outer container with goods and cooling elements the outer container can be closed by using the cover 23. Alternatively, the outer container can be loaded through a side door, which is closed after placing goods and cooling elements.

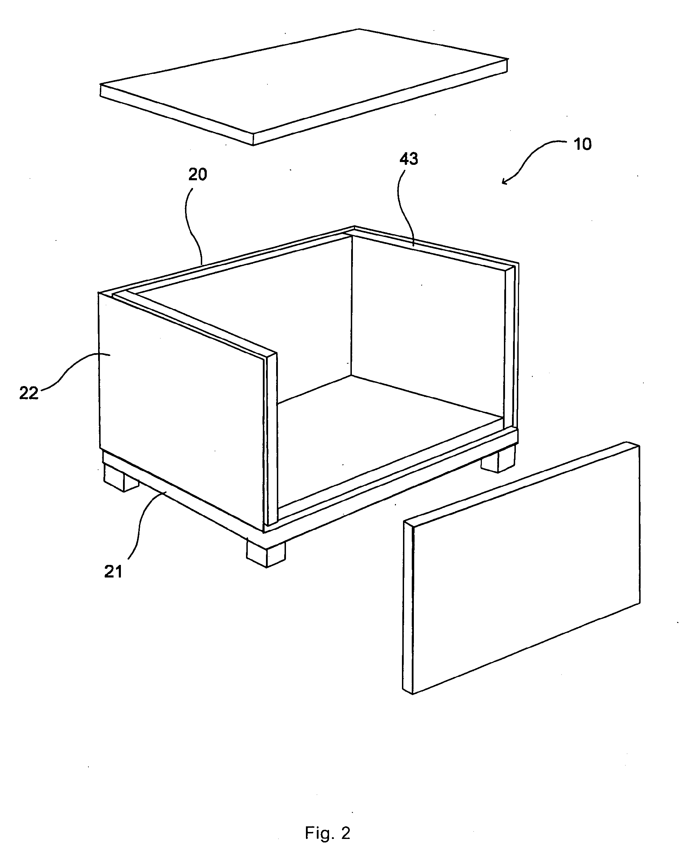

Furthermore, additional insulation elements can be placed between the sidewalls of the outer container and the cooling elements. These insulation panels are not shown in Fig. 1, but can be placed as shown in Fig. 2. The collapsible container according to the invention can be used with or without additional insulation panels. In case the material of the outer container already has sufficient insulation properties, no additional insulation panels might be required, for example. However, in one embodiment of the invention, six insulation panels are placed in the outer container before adding the temperature sensitive goods and the cooling elements. Preferably, one insulation panel 43 is placed on each wall and on the base plate 21. The insulation panels can be made from polyurethane, for example, and have a thickness of about 60mm. After cooling elements have been placed on the top of the inner container 30, another insulation panel is placed on these cooling elements and the outer container 20 is closed by means of the cover 23.

In a preferred embodiment of the invention, at least two different types of cooling elements are used. Usually, cooling elements have to be cooled to temperatures far below 0°C in order to maintain the required temperatures within a container during the entire shipment. In pharmaceutical industries, the target usually is to keep products at temperatures of +2°/+8°C. For cooling of the elements they usually have to be put into a freezer for a certain period of time until they reach the desired temperature. Normally, they have to be frozen about 24 hours. However, they can not be used in a container with temperature sensitive goods like medicals immediately after freezing, because cooling elements with very low temperatures will freeze the goods in the inner container. Therefore, the cooling elements are defrosted again for a couple of hours until they reach acceptable temperatures. Thereby, defrosting protocols have to be observed, which is time-consuming.

When two different types of cooling elements are used, they can be cooled to different temperatures and can be arranged in the interspace 24 of the outer container 20, accordingly. Preferably, at least two layers of different types of cooling elements 41 and 42 are arranged in the surrounding interspace 24 between the inner container 30 and the cover 23 and the sidewalls 22 of the outer container 20. Thereby, the inner layer close to the inner container 30 comprises the first type of cooling elements 41 which are cooled to temperatures between 0°C and 10°C and the outer layer close to the sidewalls 22 of the outer container 20 comprises the second type of cooling elements 42 which are cooled to temperatures between -15°C and -25°C. In a preferred embodiment of the invention, the first type of cooling elements 41 are cooled to about +5°C and the second type of cooling elements 42 are cooled to about -20°C. Thereby, cooling elements of +5°C lie close to the sensitive goods 50 and create a thermal barrier to the cooling elements of -20°C. The outer (colder) cooling elements 42 ensure the required temperatures during shipment, but the sensitive goods within the inner container are not harmed because of the barrier of inner cooling elements of temperatures above 0°C.

Both types of cooling elements are cooled to their desired temperatures about 24 to 48 hours prior to the shipping and can be placed in the container immediately after the freezing procedure. Thereby, no additional hours for defrosting are necessary.

The first type of cooling element, which serves as a thermal barrier can comprise a viscous hydro gel, for example. Appropriate reticulated supra acrylic absorbers are known. The second type of cooling element, which is cooled to temperatures below 0°C, can be a slow thawing gel made from water and copolymer sodium acrylate. In order to distinguish the cooling elements more easily, they can be colored differently.

Naturally, different temperatures can be chosen for the cooling elements, if other temperatures than +2°/+8°C are required for temperature sensitive goods. If goods are to be kept under ambient conditions under 25°C, for example, a cooling package can be composed with different numbers and/or kinds of cooling elements. For temperatures of about +2/+25°C, only one cooling element might be necessary and insulation panels will then ensure the required temperature within the container.

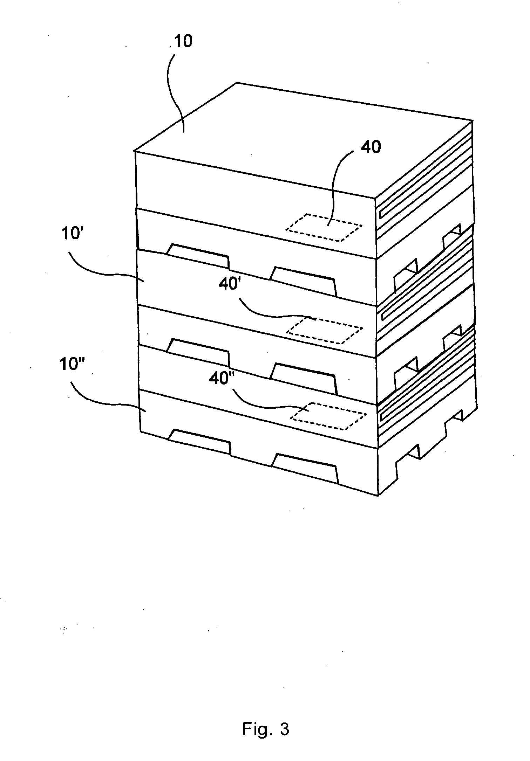

In a preferred embodiment of the invention, several cooling elements create a cooling package 40, which can be placed in a collapsible container 20. Such cooling package 40 can further comprise several insulation panels 43. Both container and cooling package constitute a collapsible container package which can be provided to customers of a container pooling system. Thereby, customers do not have to maintain their own container pool but can order containers for shipping of temperature sensitive goods. If the remaining space within a collapsed container allows for placing a cooling package 40 with the collapsed container, a container package can be provided to a customer this way. Three collapsed containers packages 10, 10' and 10" with integrated cooling packages 40, 40' and 40" are schematically shown in Figure 3. Several containers equipped with cooling packages can easily be stacked in a container storage as shown in Figure 3. The cooling packages can be placed within the collapsed container or they can be attached to the outside of a container, for example. Alternatively, they can be placed within unfolded containers. In particular, if cooling packages comprise insulation panels, too, they will usually need more space and will therefore be attached to a collapsed container or will be placed within an unfolded container. In another embodiment of the invention, collapsible container and cooling elements (and insulation panels) are provided separately.

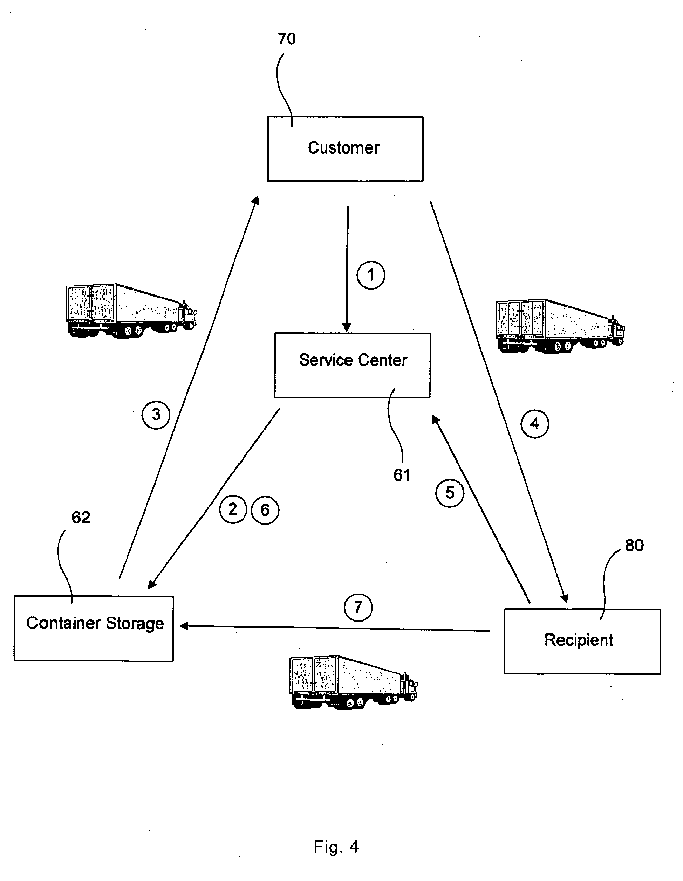

A container pooling system 60 which provides collapsible containers for shipping temperature sensitive goods is shown in Figure 4. Different steps and activities of the components of the system are illustrated with arrows and sequenced numbers in circles.

The container pooling system comprises at least one service center 61 and at least one container storage 62. Collapsible containers 20 and cooling packages 40 are stored in the container storage 62. Several container storages can be operated to cover a wide area or even different countries. When a customer 70 of the pooling system needs a container for shipping temperature sensitive goods he/she sends a container order to the service center 61. The order can by placed via an internet application, for example. The service center receives and processes the container order and forwards the order to one of the container storages. Preferably, a collapsed container as described above is linked to a cooling package and is sent from the container storage to the customer. Because of the collapsible container the transport requires minimum loading space. If a cooling package and corresponding insulation panels have to be provided within unfolded containers because of their size, one unfolded container can be used for the transport of several cooling packages and insulation panels, whereas the corresponding containers are provided in collapsed form. For example, three unfolded containers can be used for providing nine insulation panels kits, three unfolded containers can be used for providing nine cooling packages and three containers can be provided in collapsed form. When two unfolded containers and three collapsed containers are stacked, respectively, four pallet spaces in a truck are needed for nine fill kits.

The customer receives the collapsed container, unfolds the sidewalls and places goods in the container. If the container has been delivered in its unfolded form, no unfolding and installation is required. Additional insulation panels can be placed within the container. The cooling elements are frozen and arranged within the container according to enclosed instructions. The container is closed and shipped to a recipient 80 at the end of a supply chain, for example. The recipient removes the goods and sends a collection request to the service center. Alternatively, the customer 70 sends a collection request to the service center 61, once the recipient has received the goods. Thereupon, the container and the used cooling package are collected at the recipient's site and transported to a container storage again. Alternatively, only the container is collected and the used cool packs and insulation panels remain at the customer's site.

### List of reference numerals

- 10,10',10": Collapsible container package
- 20: Outer container
- 21: Base plate
- 22: Sidewall
- 23: Cover
- 24: Interspace
- 30: Inner container
- 40,40',40": Cooling package
- 41: First type of cooling element
- 42: Second type of cooling element
- 43: Insulation panel, insulation element
- 50: Goods, medicals

- 60: Container pooling system
- 61: Service center
- 62: Container storage
- 70: Customer
- 80: Recipient of goods

## Claims

1. Collapsible container package (10,10',10") comprising a collapsible outer container (20) with a base plate (21), a cover (23) and four hinged sidewalls (22) which form the interior space of the unfolded container (20) and at least one inner container (30), which is arranged in the interior space of the unfolded outer container (20) with a surrounding interspace (24) between the inner container (30) and the cover (23) and the sidewalls (22) of the outer container (20),
**characterized in that,**
several cooling elements (41;42) are arranged in the surrounding interspace (24) between the inner container (30) and the cover (23) and the sidewalls (22) of the outer container (20).

2. Collapsible container package according to Claim 1,
**characterized in that,**
further cooling elements are arranged between the inner container (30) and the base plate (21) of the outer container (20).

3. Collapsible container package according to Claim 1 or 2,
**characterized in that,**
insulation panels (43) are placed between the cooling elements (41;42) and the cover (23), the sidewalls (22) and/or the base plate (21) of the outer container (20).

4. Collapsible container package according to one of Claims 1 to 3,
**characterized in that,**
at least two layers of different types of cooling elements (41 ;42) are arranged in the surrounding interspace (24) between the inner container (30) and the cover (23) and the sidewalls (22) of the outer container (20), whereby the inner layer close to the inner container (30) comprises a first type of cooling elements (41) which are cooled to temperatures between 0°C and 10°C and the outer layer close to the sidewalls (22) of the outer container (20) comprises a second type of cooling elements (42) which are cooled to temperatures between -15°C and -25°C.

5. Collapsible container package according to Claim 4,
**characterized in that,**
the first type of cooling elements (41) are cooled to about +5°C and the second type of cooling elements (42) are cooled to about -20°C.

6. Collapsible container package according to one of Claims 1 to 5,
**characterized in that,**
the material of the base plate (21), the cover (23) and the hinged sidewalls (22) of the outer collapsible container (20) is a plastic material.

7. Collapsible container package according to one of Claims 1 to 6,
**characterized in that,**
the inner container (30) is a cardboard box.

8. Method for packing temperature sensitive goods (50) into a collapsible container packaging (10,10',10") according to one of Claims 1 to 7,
**characterized in that,**
the temperature sensitive goods (50) are placed at least one inner container (30), which is placed in the interior space of the unfolded outer container (20), and several cooling elements (41;42) are arranged at least in the surrounding interspace (24) between the inner container (30) and the sidewalls (22) of the outer container (20) and on the top of the inner container (30), whereupon the outer container (20) is closed by using the cover (23).

9. Method according to Claim 8,
**characterized in that,**
further cooling elements are placed on the base plate (21) of the outer container (20) before the inner container (30) is placed in the interior space of the unfolded outer container (20).

10. Method according to Claim 8 or 9,
**characterized in that,**
insulation panels (43) are placed between the cooling elements (41;42) and the cover (23), the sidewalls (22) and/or the base plate (21) of the outer container (20).

11. Method according to one of Claims 8 to 10,
**characterized in that,**
at least two layers of different types of cooling elements (41 ;42) are arranged in the surrounding interspace (24) between the inner container (30) and the sidewalls (22) of the outer container (20) and on top of the inner container (30), whereby the inner layer close to the inner container (30) comprises a first type of cooling elements (41) which are cooled to temperatures between 0°C and 10°C and the outer layer close to the sidewalls (22) and the cover (23) of the outer container (20) comprises a second type of cooling elements (42) which are cooled to temperatures between -15°C and -25°C prior to placing them in the interspace (24) between the inner container (30) and the outer container (20).

12. Method according to Claim 11,
**characterized in that,**
the first type of cooling elements (41) are cooled to about +5°C and the second type of cooling elements (42) are cooled to about -20°C.

13. Container pooling system (60) comprising a service center (61) connected to a container storage (62), in which several containers are stored, whereby the service center (61) comprises means for receiving and processing container orders from one or more customers (70) of the container pooling system (60) and the service center (61) further comprises means for forwarding the container orders to the container storage (62),
**characterized in that,**
the containers stored in the container storage (62) are reusable collapsible containers (20) and each container (20) is linked to a cooling package (40;40';40") that comprises several cooling elements (41;42).

14. Container pooling system according to Claim 13,
**characterized in that,**
the cooling package (40;40';40") is arranged within each collapsed container (20) and the containers (20) and the linked cooling packages (40;40';40") can constitute a collapsible container package (10;10';10") according to one of Claims 1 to 6.

15. Container pooling system according to Claim 13 or 14,
**characterized in that,**
the cooling package (40;40';40") comprises two types of cooling elements (41 ;42) whereby the first type of cooling elements (41) are designed to be cooled to temperatures between 0°C and 10°C and the second type of cooling elements (42) are designed to be cooled to temperatures between -15°C and - 25°C.

16. Container pooling system according to Claim 15,
**characterized in that,**
the first type of cooling elements (41) are designed to be cooled to +5°C and the second type of cooling element (42) are designed to be cooled to -20°C.

17. Container pooling system according to one of Claims 13 to 16,
**characterized in that,**
the cooling package (40;40';40") comprises insulation panels (43).

18. Method for operating a container pooling system (50) according to one of Claims 13 to 17,
**characterized in that,**
reusable collapsible containers (20) are stored in a container storage (62) and a service center (61) receives a container order from a customer (70) of the container pooling system (60), whereupon the container order is processed by the service center (61) and forwarded to the container storage (62), and a collapsible container (20) is linked to a cooling package (40;40';40") that comprises several cooling elements (41;42), whereupon said container (20) and said cooling package (40;40';40") are transported to the customer (70).
